# EUROPEAN PATENT SPECIFICATION

(11) **EP 0 468 747 B1**
(45) Date of publication and mention of the grant of the patent: **10.04.1996**
(21) Application number: 91306700.5
(22) Date of filing: 23.07.1991
(51) Int. Cl.: G11B 27/30, G11B 27/32

(54) **Timing signal converters in recording/reproducing apparatus with a rotary head drum**
Taktsignalwandler in Aufzeichnungs-/Wiedergabegerät mit rotierender Kopftrommel
Convertisseurs d'un signal d'horloge dans un appareil d'enregistrement de reproduction avec tambour rotatif à têtes

(30) Priority: 24.07.1990 JP 193997/90
(43) Date of publication of application: 29.01.1992
(73) Proprietor: SONY CORPORATION, Tokyo 141 (JP)
(72) Inventor: Sekiguchi, Fukunori, c/o Patents Division, Shinagawa-ku, Tokyo 141 (JP)
(74) Representative: Harris, Ian Richard

(56) References cited:
- EP-A- 0 254 279
- EP-A- 0 352 338
- EP-A- 0 373 895
- PATENT ABSTRACTS OF JAPAN vol. 13, no. 324 (P-903)21 July 1989 & JP-A-1 091 389

## Description

This invention relates to timing signal converters in recording/reproducing apparatus with a rotary head drum. Such converters can, for example, be used to record or reproduce a time code unsynchronized with the rotation of a rotary head (such as a time code in the longitudinal direction of a recording tape) without the necessity of employing any fixed time code recording/playback head.

In a rotary head type recording/playback apparatus, there exists a requirement to record or reproduce a time code unsynchronized with the rotation of a rotary head.

For example, in a rotary head type digital audio tape recorder (R-DAT), it may be needed to record a longitudinal time code (LTC) on a tape for a video tape recorder (VTR) so as to attain convenience for editing and so forth. In such a case, it becomes necessary for a recording/playback section to comply with a timing signal synchronized with the rotary head, and also for an input/output signal section to comply with another timing signal such as a longitudinal time code unsynchronized with the rotary head.

To meet this requirement, there is known a method of recording a control signal, which serves for controlling the LTC or the motion of a tape, on a track separately from an oblique recording track formed by the rotary head. With this method, however, there is the necessary of employing a fixed head, in addition to the ordinary rotary head, for recording a time code in the longitudinal direction of the tape.

For the purpose of solving the problem, our Japanese laid-open patent specification 63/29391, eliminates the necessity of forming a longitudinal recording track by a fixed head, by recording a converted time code in a sub-code area of an oblique recording format in an R-DAT. Thus, in an exemplary case of using a 30-Hz time code corresponding to a head rotation rate of 30 rpm in a rotary head type VTR, it becomes possible to record and reproduce a 30-Hz time code in an R-DAT where a head is driven at a rate of 100/3 rpm. To do this, there are included a time code reader, a time code generator, a counter for counting the number of bits, and a latch circuit for latching the counted value, wherein a carry pulse for the counter is generated at every predetermined value and is supplied as a reference synchronizing signal.

However, even by the use of the above-described technique in a practical hardware structure, it is considered rational, due to the need for combination with other related operations, to provide a microprocessor (MPU) for synchronously controlling the time code reader and the time code generator, or to enable the MPU to perform both generation of a time code and reading thereof.

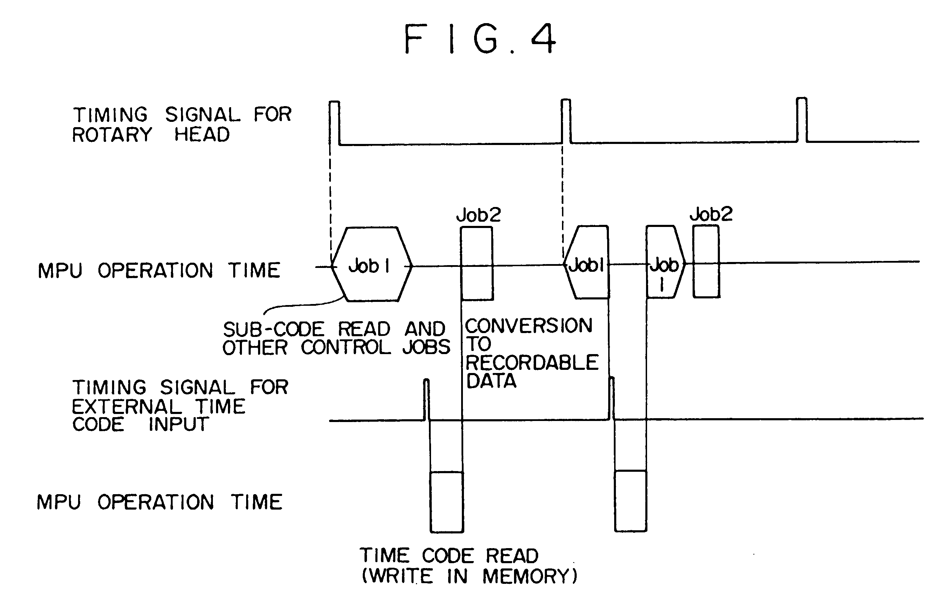

In this case, as shown in Figure 4, representing an exemplary operation time allocation, there is a problem that the MPU operation based on a timing signal synchronized with a rotary head interferes with the operation based on another timing signal unsynchronized with the rotary head. Consequently, it is necessary to execute a process of interrupting one operation while performing the other operation or to form a period free from any interruption so as to execute a batch of jobs. As a result of such process, a temporal non-coincidence is induced eventually to raise problems such as a timing discrepancy, a partial incompletion of the job, and partial carry-over thereof to the next cycle. Moreover, it is not easy to prepare an MPU program with an interrupt process inclusive of solutions for the above problems.

In accordance with a first aspect of the invention there is provided a recording apparatus with a rotary head drum, a converter for converting first time code signals to second time code signals during recording, and means for recording said second time code signals on said recording medium, characterised in that said converter comprises:
means operable during recording, to generate memory write and memory read select signals in response to first and second timing signals corresponding, respectively, to timings of said first time code signals and the rotation of said rotary drum;
memory means operable during recording, to store said first time code signals in response to said memory write select signals and to read out stored time code signals in response to said memory read select signals; and
means operable during recording, to process said time code signals output from said memory means for generating said second time code signals synchronised with said rotation of said rotary head.

In accordance with a second aspect of the invention there is provided a reproducing apparatus with a rotary head drum, a converter for converting second time code signals to first time code signals during reproduction, and means for reproducing said second time code signals from a recording medium, characterised in that said converter comprises:
means operable during reproduction, to generate memory write and memory read select signals in response to second and first timing signals corresponding, respectively, to timings of the rotation of said rotary drum and timings of said first time code signals;
means operable during reproduction, to process said reproduced second time code signals; and
memory means operable during reproduction, to store said processed second time code signals in response to said memory write select signals and to read out said stored time code signals in response to said memory read select signals to generate said first time code signals for indicating a recording medium position.

Thus an embodiment of the present invention can provide a timing signal converter for use in a rotary head type recording/reproducing apparatus wherein the necessity of an interrupt process by an MPU can be eliminated for converting a timing signal synchronized with a rotary head to control a recording/playback section, and another timing signal unsynchronized with the rotary head and used in an input/output data section.

An embodiment may be equipped with a semiconductor memory having first and second memory areas. Data are written in the first memory area and are then read out therefrom while being written in the second memory area, and such operations are repeated alternately.

By reading the written data in the next cycle (that is, with a delay of substantially one cycle), it is rendered possible to read the data properly even if the memory read timing is not in synchronism with the memory write timing.

When the data written in the memory synchronously with the rotation of the rotary head drum are read out at a timing unsynchronized with the rotary head drum, the signal recorded on the oblique track by the rotary head can be reproduced therefrom and outputted as the data of a time code or the like at a timing unsynchronized with the rotary head drum. However, since the reading is executed with a delay of substantially one cycle as compared with the writing in the semiconductor memory, the time code data thus read out are replaced by calculation with the proper time code data anterior by substantially one cycle.

There may be further provided a timing circuit which generates a signal for selecting the write area and the read area of the semiconductor memory in accordance with a timing signal synchronized with the rotary head drum and another timing signal used in an input/output section and unsynchronized with the rotary head drum, so that it becomes possible to eliminate the necessity of an interrupt process executed by the MPU.

Such embodiments can solve the known difficulties in preparing an interrupt program to avert an inconvenience that may otherwise be caused during the operation of the MPU upon occurrence of interference of the two timing signals. Furthermore, the above construction facilitates manufacture of a recording/playback apparatus which is capable of recording a timing code unsynchronized with the rotary head without the necessity of forming a recording track for a fixed head.

The invention will now be described by way of example with reference to the accompanying drawings, throughout which like parts are referred to by like references, and in which:
Figure 1 is a block diagram of an embodiment of the present invention, in which (a) and (b) represent constitutions in a recording mode and a playback mode respectively;
Figure 2 is a timing chart showing the operation in the recording mode;
Figure 3 is a timing chart showing the operation in the playback mode; and
Figure 4 shows allocation of the operation time in an MPU.

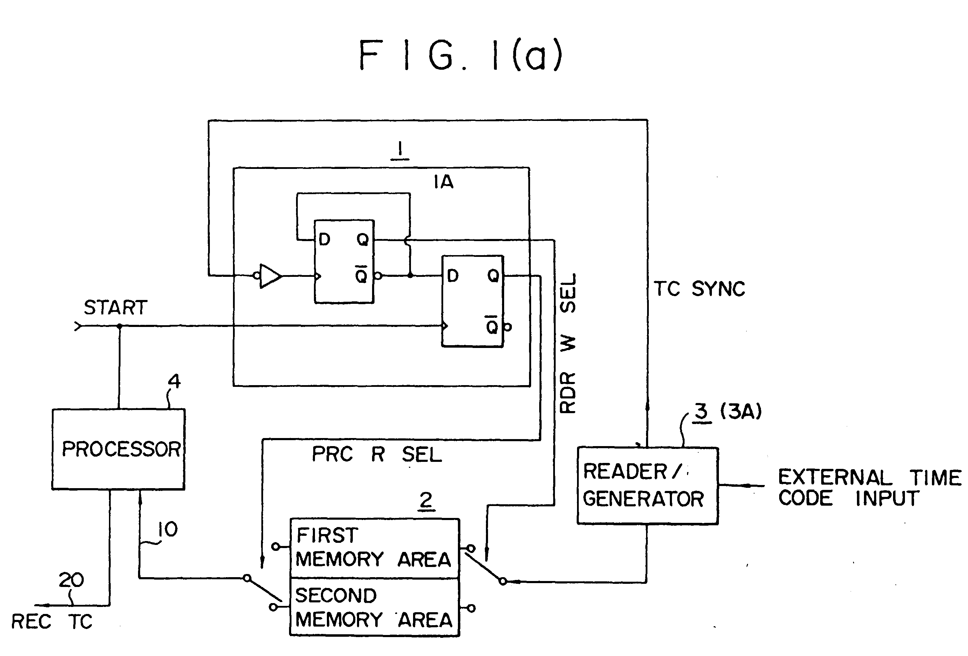

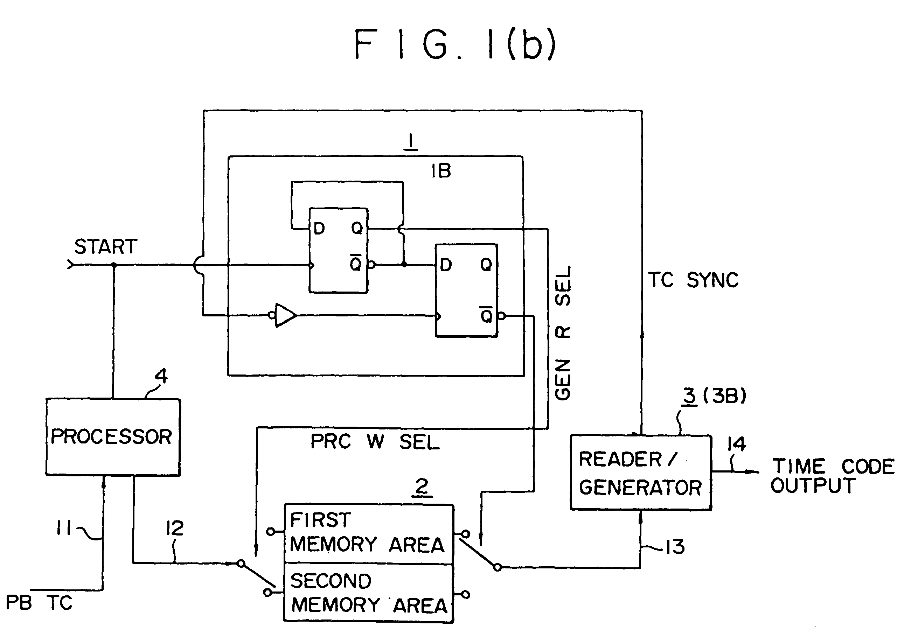

Although in Figures 1(a) and 1(b) the constitution is shown with regard to a recording mode (a) and a playback mode (b) separately for making the embodiment better understood, its actual hardware comprising a timing circuit 1, a semiconductor memory 2, a reader/generator 3 and a processor 4 is so constituted as to be operable in both recording and playback modes selectively.

For example, the reader/generator 3 is capable of functioning as a reader and a generator in accordance with a program prepared in the processor 4. Each of the reader and the generator is composable individually of a logic circuit to be used selectively through switching.

First a description will be given of the constitution for a recording operation with reference to Figure 1(a). There are included the semiconductor memory 2 having a first memory area and a second memory area, and the timing circuit 1 for generating a memory-area select signal to execute alternate repetition of reading one of the memory areas while writing the other.

Initially an external time code input (unsynchronized with the rotary head drum) is supplied to the reader/generator 3. In a recording mode, the reader/generator 3 serves as a reader 3A for feeding to the timing circuit 1 a timing signal TC SYNC obtained from the external time code input while writing the time code data, which have been read by the reader 3A, in the semiconductor memory 2 in synchronism with the timing signal TC SYNC.

In this stage of the operation, a select signal generated from the timing circuit 1 selectively determines which of the two memory areas of the semiconductor memory 2 is to be used for writing or reading the data, and also determines the read timing.

The timing circuit 1 generates memory area select signals from both the timing signal START synchronized with the rotary head drum and the timing signal TC SYNC unsynchronized therewith. Meanwhile in a recording mode, the timing circuit 1 may be simplified to an exemplary configuration denoted by reference numeral 1A in Figure 1(a).

The timing circuit 1 also generates a memory write area select signal RDR W SEL for writing, at the timing of the external input data, the external input time code data read out by the reader 3A and unsynchronized with the rotary head drum, and further generates a memory area selecting/read timing designating signal PRC R SEL for enabling the processor 4 to read the external input time code data from the semiconductor memory 2 in the next cycle (with a delay of substantially one cycle) at the timing synchronized with the rotary head drum. The time code data thus read is converted by the MPU 4 into a predetermined data format suited to be recorded on a tape (for example, from parallel data into serial data), thereby producing a tape-recordable time code (synchronized with the rotary head). This time code is then recorded on an oblique recording track by the rotary head. In the case of an R-DAT, such time code is recorded in a sub-code area. The processor 4 generally comprises a microprocessor (MPU) and is synchronized with the control action for the rotary head and the tape motion. The absolute-value delay of the time code caused by the reading with a delay of substantially one cycle has a rule as will be described later, so that such delay can be calculated and corrected.

Now the constitution in a playback mode will be described below with reference to Figure 1(b).

There are included the semiconductor memory 2 having a first memory area and a second memory area, and the timing circuit 1 for generating a select signal to execute alternate repetition of reading one of the two memory areas while writing the other. In the playback mode, the playback time code data (synchronized with the rotary head drum) read out from the oblique recording track by the rotary head is converted into a predetermined data format suited to be written in the memory (for example, from serial data into parallel data), and are then written in the semiconductor memory 2 by the processor 4 at the timing synchronized with the rotary head drum.

In this stage of the operation, a select signal generated from the timing circuit 1 selectively determines which of the two memory areas of the semiconductor memory 2 is to be used for writing the data and also determines the read timing, as in the recording mode.

The timing circuit 1 generates memory area select signals from the timing signal START synchronized with the rotary head drum and also from the timing signal TC SYNC unsynchronized therewith in the same manner as in the recording mode. In the playback mode, the timing circuit denoted by reference numeral 1B in Figure 1(b) is used.

The timing circuit 1 supplies a memory write area select signal PRC W SEL for writing, in synchronism with the rotary head, the time code data which is synchronized with the rotary head drum and is to be written in the memory by the processor 4, and also supplies a memory read area selecting/read timing designating signal GEN R SEL for enabling the time code generator 3B of the reader/generator 3 to read, in the next cycle (with a delay of substantially one cycle), the written data at the timing of the external time code unsynchronized with the rotary head drum.

The time code data thus read out by the time code generator 3B is outputted at the timing of the external time code unsynchronized with the rotary head drum. It is to be noted here that, since the time code data are read out from the semiconductor memory 2 with a delay of substantially one cycle, there occurs a delay of substantially one cycle in the tape position data as well. For this reason, at the time of writing in the memory by the processor 4, a calculation is executed on the basis of the reproduced time code to obtain a proper time code value anterior by substantially one cycle, and the proper data are written in the semiconductor memory 2. This process will be explained later in detail.

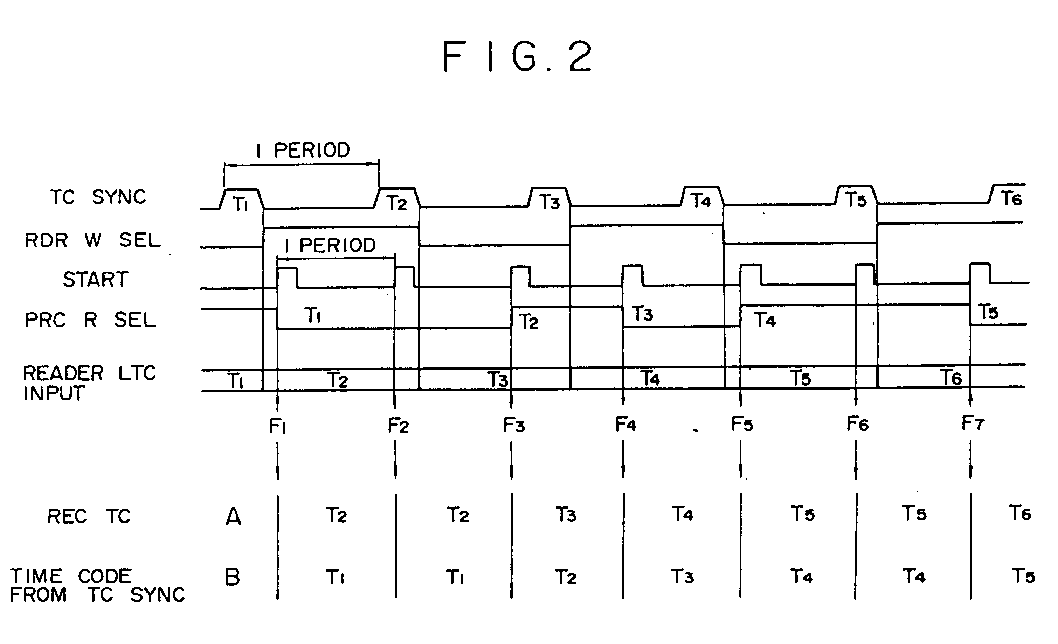

An exemplary operation of this embodiment will be described with reference to the timing chart of Figure 2 which shows a timing chart in the recording mode where the time code data at the rise of the signal START synchronized with the rotary head are to be detected with regard to an external time code (for example, LTC) inputted to the reader 3A.

In the example of Figure 2, a synchronizing signal TC SYNC of the external time code input LTC and values T1, T2, T3 ... Ti ... (where i is a positive integer) of the time code are outputted from the reader 3A in conformity with the synchronizing signal portion at the end of the LTC inputted to the reader 3A. A memory write area select signal RDR W SEL is generated in response to such synchronizing signal TC SYNC, thereby executing a prompt operation of writing the time code values T1, T2, T3 ... Ti ... in the semiconductor memory 2. When a timing signal synchronized with the rotary head drum, such as a signal START having a frequency of 100/3 Hz, is inputted to the timing circuit 1, then an inverted signal of the memory write area select signal RDR W SEL is latched at the rise of the signal START thereby to generate a memory read area select signal PRC R SEL. More specifically, the processor 4 reads the data from one memory area, which is not in the writing mode, of the first and second memory areas in the semiconductor memory 2, at the timing synchronized with the signal START. When the contents T1, T2, T3 ... Ti ... (tape-recordable time code RED TC) of the time code data read out between observation points F1, F2, F3 ... Fi ... corresponding to the rises of the signal START are compared with the initial output of the reader 3A, it is found that the number of each Ti is increased by 1. Although such a numerical shift is unavoidable, the time code value can be corrected by a simple calculation with facility since the pattern of the time code data is generally known. The calculation for such correction may be executed by the processor 4 before the tape recording operation or may be performed with regard to the playback output data in case there exists no restriction relative to the tape recording format.

For example, in Figure 1(a), a time code shown in Figure 2B is supplied to the input line 10 of the processor 4 by the operation described above, and a next time code shown in Figure 2A is obtained from the output line 20 of the processor 4.

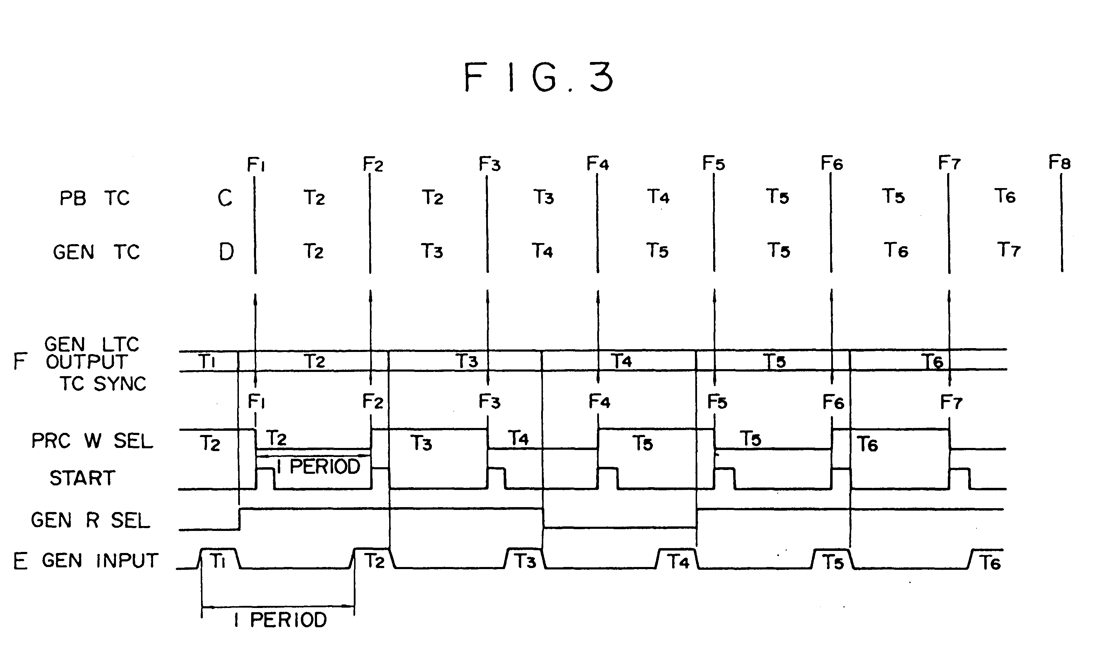

An exemplary timing chart in the playback mode is shown in Figure 3. The time code data T1, T2, T3 ... read out by the rotary head are supplied in the sequence of Figure 3C to the processor 4 via the input line 11 thereof shown in Figure 1 (b), then are once converted into a predetermined data format and are written in the semiconductor memory 2 via the output line 12 of the processor 4 in synchronism with the memory write area select signal PRC W SEL generated at the rise of the signal START synchronized with the rotation of the rotary head drum. The time code obtained from the output line 12 is the one next to the reproduced time code C and calculated in the processor 4, and such time code of Figure 3D is supplied to the memory area 2. In this stage, the time code data are read out from the memory area designated by the memory read area select signal GEN R SEL obtained by latching the inverted signal of the memory write area select signal PRC W SEL at the rise of the synchronizing signal TC SYNC of the external time code LTC. When the contents T1, T2, T3 ... Ti ... of the time code data thus read out are compared with the contents of the memory-written data (playback time code PB TC ) at observation points F1, F2, F3 ... Fi ... corresponding to the rises of the signal START, it is found that a proper result is attained by such setting as to write the value of the preceding data Ti in the memory at the point Fi. Since the prescribed rule for the data Ti is usually known in advance, the above calculation can be easily executed as mentioned by the processor 4 on the basis of the time code value in the playback mode at the time of converting the playback serial data into parallel data.

The time code of Figure 3D is written in the memory areas 1 and 2 of the semiconductor memory alternately in accordance with the data write select signal PRC W SEL synchronized with the rotary head drum. The time code thus written is read out from the memory areas 1 and 2 of the semiconductor memory 2 alternately in accordance with the unsynchronized data read select signal GEN R SEL at the timing shown in Figure 3, whereby a time code of Figure 3E is inputted to the time code generator 3 via the input line 13. Thereafter the time code thus read is processed by the time code generator 3 so that a time code TC SYNC shown in Figure 3F is supplied via the output line 14 of the time code generator 3 shown in Figure 1(b).

In the above embodiment including the timing circuit 1 additionally provided and the semiconductor memory 2 with first and second memory areas, a calculation of replacing the time code data is needed in the processor 4. However, there exists no necessity for an interrupt function with respect to the signals having, for example, a frequency of 100/3 Hz synchronized with the rotary head and a frequency of 30 Hz unsynchronized with the rotary head, hence ensuring a remarkably advantageous effect.

With the above-described embodiment of the present invention, there is realized an improved timing signal converter for use in a rotary head type recording/playback apparatus, wherein a semiconductor memory having first and second memory areas is included, and a timing circuit is provided for alternately selecting a data writing operation and a data reading operation with respect to the memory. Accordingly it becomes possible to eliminate the necessity of executing an interrupt process by a microprocessor for converting a timing signal synchronized with a rotary head to control a recording/playback section and another timing signal unsynchronized with the rotary head and used in an input/output data section.

Consequently, the known difficulties are solvable in preparation of an interrupt program to avert an inconvenience that may otherwise be caused during the operation of the microprocessor upon occurrence of interference of the two timing signals synchronized and unsynchronized respectively with the rotary head drum. Furthermore, the constitution mentioned facilitates manufacture of a recording/playback apparatus which is capable of recording a timing code unsynchronized with the rotary head drum without the necessity of a recording track relative to a fixed head.

## Claims

1. A recording apparatus with a rotary head drum, a converter for converting first time code signals to second time code signals during recording, and means for recording said second time code signals on said recording medium, characterised in that said converter comprises:
means (1), operable during recording, to generate memory write and memory read select signals in response to first and second timing signals corresponding, respectively, to timings of said first time code signals and the rotation of said rotary drum;
memory means (2) operable during recording, to store said first time code signals in response to said memory write select signals and to read out stored time code signals in response to said memory read select signals; and
means (4), operable during recording, to process said time code signals output from said memory means for generating said second time code signals synchronised with said rotation of said rotary head.

2. A reproducing apparatus with a rotary head drum, a converter for converting second time code signals to first time code signals during reproduction, and means for reproducing said second time code signals from a recording medium, characterised in that said converter comprises:
means (1), operable during reproduction, to generate memory write and memory read select signals in response to second and first timing signals corresponding, respectively, to timings of the rotation of said rotary drum and timings of said first time code signals;
means (4), operable during reproduction, to process said reproduced second time code signals; and
memory means (2), operable during reproduction, to store said processed second time code signals in response to said memory write select signals and to read out said stored time code signals in response to said memory read select signals to generate said first time code signals for indicating a recording medium position.

3. A recording and reproducing apparatus comprising apparatus according to claim 1 and apparatus according to claim 2.

4. Apparatus according to claim 2 or claim 3, wherein said processing means (4) is operable during reproduction to process said second time code signals in accordance with a delay timing for generating said time code signals to be stored.

5. Apparatus according to any one of the preceding claims, wherein said recording medium is a magnetic tape.

6. Apparatus according to any one of the preceding claims, wherein the frequencies of said first and second time code signals are 30Hz and 100/3Hz, respectively.

## Patentansprüche

1. Aufzeichnungsvorrichtung mit einer rotierenden Kopftrommel, einem Umsetzer zur Umsetzung erster Zeitcodesignale zu zweiten Zeitcodesignalen während der Aufzeichnung, und einer Einrichtung zur Aufzeichnung der zweiten Zeitcodesignale auf dem Aufzeichnungsträger,
dadurch **gekennzeichnet**,
daß der Umsetzer aufweist:
eine Einrichtung (1), die während der Aufzeichnung betreibbar ist, zur Erzeugung von Speicherschreib- und Speicherlese-Wahlsignalen als Antwort auf erste und zweite Zeitsteuersignale entsprechend der Zeitsteuerung der ersten Zeitcodesignale bzw. der Drehung der rotierenden Trommel,
eine Speichereinrichtung (2), die während der Aufzeichnung betreibbar ist, zur Speicherung der ersten Zeitcodesignale als Antwort auf die Speicherschreib-Wahlsignale und zum Auslesen gespeicherter Zeitcodesignale als Antwort auf die Speicherlese-Wahlsignale, und
einer Einrichtung (4), die während der Aufzeichnung betreibbar ist, zur Verarbeitung der Zeitcodesignale, die von Speichereinrichtung ausgegeben werden, zur Erzeugung der zweiten Zeitcodesignale, die mit der Drehung des Drehkopfs synchronisiert sind.

2. Wiedergabevorrichtung mit einer rotierenden Kopftrommel, einem Umsetzer zur Umsetzung zweiter Zeitcodesignale in erste Zeitcodesignale während der Wiedergabe, und einer Einrichtung zur Wiedergabe der zweiten Zeitcodesignale von einem Aufzeichnungsträger,
dadurch **gekennzeichnet**,
daß der Umsetzer aufweist:
eine Einrichtung (1), die während der Wiedergabe betreibbar ist, zur Erzeugung von Speicherschreib- und Speicherlese-Wahlsignalen als Antwort auf zweite und erste Zeitsteuersignale entsprechend der Zeitsteuerung der Drehung der rotierenden Trommel bzw. der Zeitsteuerung der ersten Zeitcodesignale,
eine Einrichtung (4), die während der Wiedergabe betreibbar ist, zur Verarbeitung der wiedergegebenen zweiten Zeitcodesignale, und
einer Speichereinrichtung (2), die während der Wiedergabe betreibbar ist, zur Speicherung der verarbeiteten zweiten Zeitcodesignale als Antwort auf die Speicherschreib-Wahlsignale und zum Auslesen der gespeicherten Zeitcodesignale als Antwort auf die Speicherlese-Wahlsignale zur Erzeugung der ersten Zeitcodesignale zur Anzeige einer Aufzeichnungsträgerposition.

3. Aufzeichnungs- und Wiedergabe-Vorrichtung mit einer Vorrichtung gemäß Anspruch 1 und einer Vorrichtung gemäß Anspruch 2.

4. Vorrichtung nach Anspruch 2 oder Anspruch 3, bei der die Verarbeitungseinrichtung (4) die zweiten Zeitcodesignale gemäß einer Verzögerungszeitsteuerung zur Erzeugung der zu speichernden Zeitcodesignale während der Wiedergabe verarbeiten kann.

5. Vorrichtung nach einem der vorhergehenden Ansprüche, bei der der Aufzeichnungsträger ein Magnetband ist.

6. Vorrichtung nach einem der vorhergehenden Ansprüche, bei der die Frequenzen des ersten und zweiten Zeitcodesignals 30 Hz bzw. 100/3 Hz sind.

## Revendications

1. Appareil d'enregistrement avec un tambour tournant à tête, un convertisseur pour convertir des premiers signaux de code temporel en deuxièmes signaux de code temporel pendant l'enregistrement, et des moyens pour enregistrer lesdits deuxièmes signaux de code temporel sur ledit support d'enregistrement, caractérisé en ce que ledit convertisseur comprend:
- des moyens (1), pouvant fonctionner pendant l'enregistrement, pour produire des signaux de sélection d'écriture dans la ne.noire et de lecture dans la mémoire en réponse à des premiers et deuxièmes signaux de cadencement correspondant respectivement à des instants de cadencement desdits premiers signaux de code temporel et à la rotation dudit tambour tournant;
- des moyens de mémoire (2), pouvant fonctionner pendant l'enregistrement, pour mémoriser lesdits premiers signaux de code temporel en réponse auxdits signaux de sélection d'écriture dans la mémoire et pour lire les signaux de code temporel mémorisés en réponse auxdits signaux de sélection de lecture dans la mémoire; et
- des moyens (4), pouvant fonctionner pendant l'enregistrement, pour traiter lesdits signaux de code temporel fournis à partir desdits moyens de mémoire pour produire lesdits deuxièmes signaux de code temporel synchronisés sur la rotation de ladite tète tournante.

2. Appareil de reproduction avec un tambour tournant à tête, un convertisseur pour convertir des deuxièmes signaux de code temporel en premiers signaux de code temporel pendant la reproduction, et des moyens pour reproduire lesdits deuxièmes signaux de code temporel à partir d'un support d'enregistrement, caractérisé en ce que ledit convertisseur comprend:
- des moyens (1), pouvant fonctionner pendant la reproduction, pour produire des signaux de sélection d'écriture dans la mémoire et de lecture dans la mémoire en réponse à des premiers et deuxièmes signaux de cadencement correspondant respectivement à des instants de la rotation dudit tambour tournant et à des instants de cadencement desdits premiers signaux de code temporels;
- des moyens (4), pouvant fonctionner pendant la reproduction, pour traiter lesdits deuxièmes signaux de code temporel reproduits; et
- des moyens de mémoire (2), pouvant fonctionner pendant la reproduction, pour mémoriser lesdits deuxièmes signaux de code temporel traités en réponse auxdits signaux de sélection d'écriture dans la mémoire et pour lire lesdits signaux de code temporel mémorisés en réponse auxdits signaux de sélection de lecture dans la mémoire pour produire lesdits premiers signaux de code temporel pour indiquer une position du support d'enregistrement.

3. Appareil d'enregistrement et reproduction comprenant l'appareil selon la revendication 1 et l'appareil selon la revendication 2.

4. Appareil selon la revendication 2 ou la revendication 3, dans lequel lesdits moyens de traitement (4) peuvent fonctionner pendant la reproduction pour traiter lesdits deuxièmes signaux de code temporel selon un cadencement retardé pour produire lesdits signaux de code temporel à mémoriser.

5. Appareil selon l'une quelconque des revendications précédentes, dans lequel ledit support d'enregistrement est une bande magnétique.

6. Appareil selon l'une quelconque des revendications précédentes, dans lequel les fréquences desdits premiers et deuxièmes signaux de code temporel sont de 30 Hz et 100/3 Hz, respectivement.
